# EUROPEAN PATENT SPECIFICATION

(11) **EP 2 848 641 B1**
(45) Date of publication and mention of the grant of the patent: **28.02.2018**
(21) Application number: 13787440.0
(22) Date of filing: 25.04.2013
(51) Int. Cl.: C08J 3/24, B29C 35/02, C08K 5/37, C08L 9/02, B29K 19/00, B29K 33/18, B29C 35/08, B29C 35/18, B29L 31/00

(54) **METHOD FOR PRODUCING RUBBER MOLDING**
VERFAHREN ZUR HERSTELLUNG EINER GUMMIFORM
PROCÉDÉ DE PRODUCTION DE MOULAGE EN CAOUTCHOUC

(30) Priority: 10.05.2012 JP 2012108913
(43) Date of publication of application: 18.03.2015
(73) Proprietor: Nichias Corporation, Tokyo 104-8555 (JP)
(72) Inventor: WATANABE, Tomokazu, Tokyo 1048555 (JP); KITAJIMA, Nahoko, Tokyo 1048555 (JP); SHIMIZU, Tomoya, Tokyo 1048555 (JP)
(74) Representative: Winter, Brandl, Fürniss, Hübner, Röss, Kaiser, Polte - Partnerschaft mbB
(86) International application number: PCT/JP2013/062299
(87) International publication number: WO 2013/168595

(56) References cited:
- JP-A- H08 157 646
- JP-A- H08 231 769
- JP-A- 2000 212 330
- JP-A- 2000 313 769
- JP-A- 2004 155 845
- JP-A- 2005 320 545
- JP-A- 2008 168 522
- SHINY PALATY ET AL: "A novel accelerator combination for the low temperature curing of silica-filled NBR compounds", JOURNAL OF APPLIED POLYMER SCIENCE, vol. 102, no. 6, 15 December 2006 (2006-12-15), pages 5680-5683, XP055137087, ISSN: 0021-8995, DOI: 10.1002/app.25036

## Description

### Technical Field

The present invention relates to a method of producing a rubber molded article.

### Background Art

For example, JP 2001-206908 A discloses a hydrosilylation reaction method, involving performing a hydrosilylation reaction of (A) a silicon compound represented by the general formula (1) : RaXbHcSi (1) (in the formula, R represents an alkyl group having 1 to 20 carbon atoms, an aryl group, or a triorganosiloxy group, and when a represents 2 or more, R's may be the same or different from each other. X represents a halogen, an alkoxy group, an acyloxy group, or a hydroxy group, and when b represents 2 or more, X's may be the same or different from each other. a and b each represent an integer of from 0 to 3, c represents an integer of from 1 to 3, and a, b, and c satisfy the relationship of a+b+c=4.) and (B) a polymer containing an alkenyl group, in the presence of (C) a catalyst containing a Group VIII metal and (D) a quinone compound.

In addition, JP 2002-37955 A describes a room-temperature-curable rubber composition, and the room-temperature-curable rubber composition includes (A) a silyl group-containing ethylene/α-olefin/unconjugated polyene random copolymer rubber having a constituent unit derived from a specific terminal vinyl group-containing norbornene compound that is an unconjugated polyene, and containing a specific hydrolyzable silyl group in a molecule thereof, (B) a partially hydrolyzed condensate including one or a plurality of specific silane compounds, having a hydrolyzable methoxysilyl group, and having a number-average molecular weight of from 250 to 2,500, and (C) a curing catalyst.

JP 2001-206908 A and JP 2002-37955 A disclose technologies based on a hydrosilylation reaction. JP 2001-206908 A discloses a technology for producing a rubber-like cured product through the hydrosilylation reaction, which can be promoted under a relatively low-temperature condition in the presence of a quinone compound. In addition, JP 2002-37955 A discloses a room-temperature-curable rubber composition capable of being cured at room temperature in the presence of a curing catalyst.

Shiny Palaty et al. (Shiny Palaty et al. J. Appl. Polym. Sci., 2006, vol. 102, no. 6, pages 5680-5683) disclose new accelerators for the low temperature curing of nitrile butadiene rubber compounds .

### Summary of Invention

### Technical Problem

In recent years, in production of a rubber molded article, studies have been made on a method of reducing an energy in the production. A step that requires a large energy in the production of the rubber molded article is a step of crosslinking molecules of a rubber compound contained in a rubber composition. Reduction of the energy used in the step of crosslinking molecules of the rubber compound provides a great advantage in that carbon dioxide emissions can be reduced in the production of the rubber molded article.

For example, JP 2001-206908 A and JP 2002-37955 A disclose technologies for progressing a crosslinking reaction of a silicon-containing substance to be crosslinked at room temperature through a hydrosilylation reaction, but disclose that a crosslinking reaction of a substance to be crosslinked, which is free of silicon and has a carbon-carbon double bond in a molecule thereof, such as EPDM, NR, or NBR, requires a crosslinking temperature of 150°C or more.

The inventors of the present invention have keenly studied a method of producing a rubber molded article, including crosslinking a rubber compound having a carbon-carbon double bond in a molecule thereof, in particular, a rubber compound including a nitrile structure having a nitrile group (-CN) and an olefin structure having an unsaturated bond represented by -C=C- at a temperature lower than a usual crosslinking temperature (150°C or more).

An object of the present invention is to provide a method of producing a rubber molded article, including crosslinking a rubber compound including a nitrile structure having a nitrile group (-CN) and an olefin structure having an unsaturated bond represented by -C=C- at a temperature lower than a usual crosslinking temperature (150°C or more) . In addition, the above-mentioned object and other objects, and novel features of the present invention become apparent from the description herein.

### Solution to Problem

According to the present invention for achieving the above-mentioned object, there is provided a method of producing a rubber molded article, including a crosslinking step of crosslinking a rubber compound at a temperature of 100°C or less, the rubber compound having a nitrile structure represented by the following formula (I) and an olefin structure represented by the following formula (II), in a rubber composition containing the rubber compound and a thiol compound having at least two thiol groups in a molecule thereof:

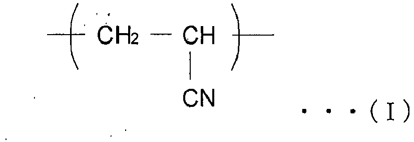

(̵R)̵ ... (II)

It should be noted that R in the formula (II) represents a divalent organic group having 4 or more carbon atoms and having an unsaturated bond represented by -C=C- in a structure thereof, wherein if the thiol compound contains a triazine ring, the triazine ring is not adjacent to any one of the thiol groups.

In addition, the thiol compound may include a compound selected from the group consisting of trimethylolpropane tris(3-mercaptopropionate), pentaerythritol tetrakis(3-mercaptopropionate), 1,4-butanediol bis(3-mercaptopropionate), 1,6-hexanedithiol, pentaerythritol tetrakis(mercaptoacetate), 1,4-butanediol bis(mercaptoacetate), pentaerythritol tetrakis(3-mercaptobutyrate), a compound represented by the following formula (A-8), and combinations thereof.

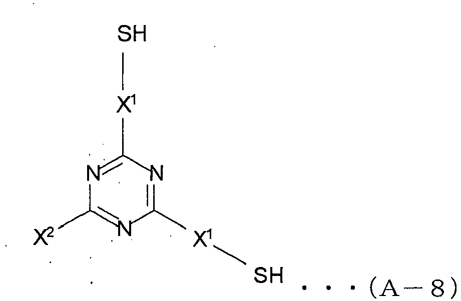

It should be noted that X¹ in the formula (A-8) represents a divalent organic group, and X² represents a hydrogen atom or a monovalent organic group.

In addition, a content of the nitrile structure in the rubber compound may be from 5 to 60 wt%.

### Advantageous Effects of Invention

According to the present invention, the method of producing a rubber molded article, including crosslinking a rubber compound including a nitrile structure having a nitrile group (-CN) and an olefin structure having an unsaturated bond represented by -C=Cat a temperature lower than a usual crosslinking temperature (150°C or more) is provided.

### Description of Embodiments

According to the present invention, there is provided a method of producing a rubber molded article, including a crosslinking step of crosslinking a rubber compound at a temperature of 100°C or less, the rubber compound having a nitrile structure represented by the following formula (I) and an olefin structure represented by the following formula (II), in a rubber composition containing the rubber compound and a thiol compound having at least two thiol groups in a molecule thereof.

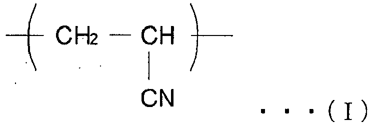

(̵R)̵ ... (II)

It should be noted that R in the formula (II) represents a divalent organic group having 4 or more carbon atoms and having an unsaturated bond represented by -C=C- in a structure thereof, wherein if the thiol compound contains a triazine ring, the triazine ring is not adjacent to any one of the thiol groups.

In the method of producing a rubber molded article of the present invention, the thiol compound having at least two thiol groups in a molecule thereof is used as a crosslinking agent for the rubber composition. As used herein, the term "crosslinking agent" refers to a compound that links (crosslinks) molecules of a rubber compound, which is a polymer contained in the rubber composition, to each other, to thereby cause a reaction for changing physical and chemical properties.

First, the thiol compound to be used in the method of producing a rubber molded article of the present invention is described. The thiol compound to be used in the method of producing a rubber molded article of the present invention is a thiol compound having at least two thiol groups in a molecule thereof, and for example, is a compound selected from the group consisting of trimethylolpropane tris(3-mercaptopropionate), pentaerythritol tetrakis(3-mercaptopropionate), 1,4-butanediol bis(3-mercaptopropionate), 1,6-hexanedithiol, pentaerythritol tetrakis(mercaptoacetate), 1,4-butanediol bis(mercaptoacetate), pentaerythritol tetrakis(3-mercaptobutyrate), a compound represented by the following formula (A-8), and combinations thereof-.

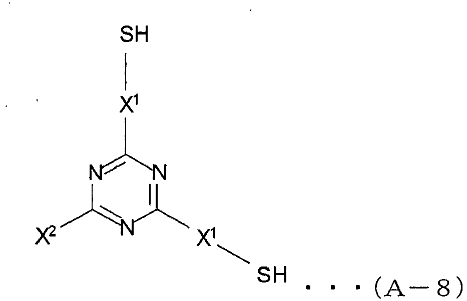

It should be noted that X¹ in the formula (A-8) represents a divalent organic group, and X² represents a hydrogen atom or a monovalent organic group. In addition, X¹ may represent a divalent organic group having 1 to 10 carbon atoms . Further, X² may represent a divalent organic group having 1 to 10 carbon atoms. In addition, X² may represent a monovalent organic group having at least one thiol group. In this case, the thiol compound represented by the formula (A-8) is a trifunctional thiol compound.

In a reaction for cross linking molecules of the rubber compound to each other, the thiol group is considered to be activated by a nitrile group (-CN), which serves as a catalyst, in the nitrile structure of the rubber compound to generate a thiyl radical (S·). Then, the thiyl radical is estimated to induce a cleavage reaction of an unsaturated bond represented by -C=C- in the olefin structure of the rubber compound, to thereby progress a crosslinking reaction. Therefore, it is considered that, in order to quickly perform the crosslinking reaction, quick generation of the thiyl radical is important. Accordingly, a functional group having an effect on an electron density of the thiol group, such as a triazine ring contained in the formula (A-8) is not present adjacently to the thiol group. Therefore, the presence of the X¹ structure in the formula (A-8) has an important meaning in the crosslinking step of the present invention.

In addition, specific chemical formulae of trimethylolpropane tris(3-mercaptopropionate), pentaerythritol tetrakis(3-mercaptopropionate), 1,4-butanediol bis(3-mercaptopropionate), 1,6-hexanedithiol, pentaerythritol tetrakis(mercaptoacetate), 1,4-butanediol bis(mercaptoacetate), and pentaerythritol tetrakis(3-mercaptobutyrate) are represented by the following formulae (A-1) to (A-7), respectively.

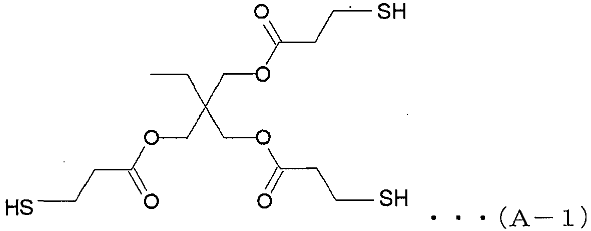

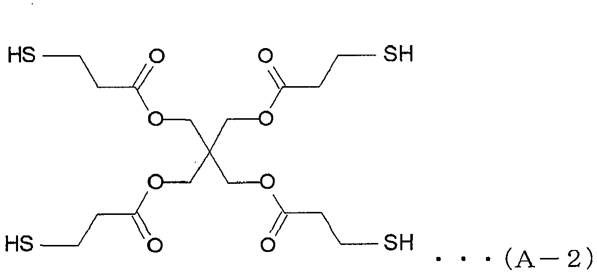

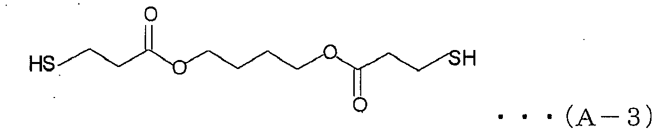

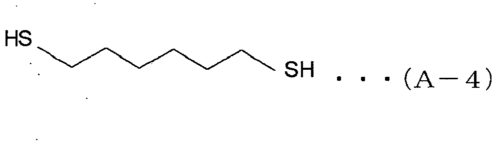

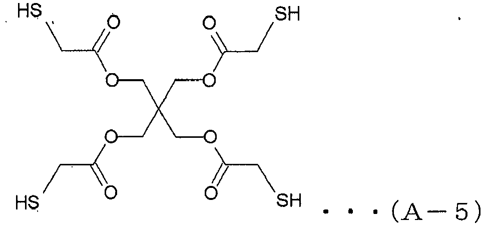

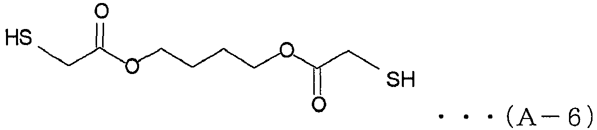

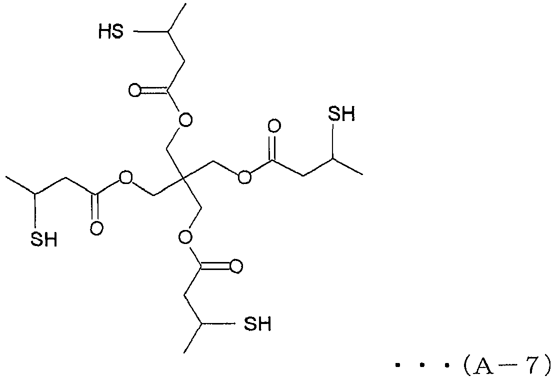

As shown in the above-mentioned formulae (A-1) to (A-8), in the thiol compound to be used in the method of producing a rubber molded article of the present invention, at least two thiol groups may be substituted on a carbon atom at the end of the thiol compound or on the carbon atom directly bonded to the carbon atom at the end of the thiol compound. Substitution of at least two thiol groups on a carbon atom at the end of the thiol compound or on the carbon atom directly bonded to the carbon atom at the end of the thiol compound is preferred because steric hindrance is reduced in the crosslinking reaction of the rubber compound.

In addition, the thiol compound to be used in the method of producing a rubber molded article of the present invention may have at least two, at least three, or at least four thiol groups. The number of the thiol groups is preferably larger because the crosslinking reaction of the rubber compound progresses more easily.

Next, the rubber compound to be used in the method of producing a rubber molded article according to the present invention is described in detail below. The rubber compound has a nitrile structure represented by the following formula (I) and an olefin structure represented by the following formula (II), as described above.

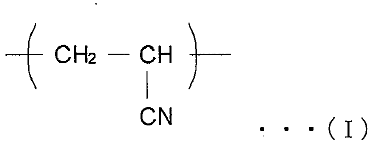

(̵R)̵ ... (II)

It should be noted that R in the formula (II) represents a divalent organic group having 4 or more carbon atoms and having an unsaturated bond represented by -C=C- in a structure thereof. In addition, R in the formula (II) may represent a divalent organic group having 4 or more and 100 or less carbon atoms and having an unsaturated bond represented by -C=C- in a structure thereof, or may represent a divalent organic group having 4 or more and 60 or less carbon atoms and having an unsaturated bond represented by -C=C- in a structure thereof. In addition, R in the formula (II) may represent a divalent organic group having 4 carbon atoms and having an unsaturated bond represented by -C=C- in a structure thereof.

In the method of producing a rubber molded article of the present invention, when a physical distance between the nitrile structure represented by the formula (I) and the unsaturated bond (-C=C-) contained in the olefin structure represented by the formula (II) in the structure of the rubber compound is small, the reaction progresses rapidly, which is preferred. When the number of carbon atoms of R in the formula (II) is small, the physical distance between the unsaturated bond (-C=C-) contained in the formula (II) and the nitrile structure represented by the formula (I) is small, which is preferred.

In addition, the rubber compound may include the nitrile structure represented by the formula (I) and the olefin structure represented by the formula (II) . In this case, the rubber compound may include the nitrile structure represented by the formula (I) and the olefin structure represented by the formula (II), and may have a structure in which the nitrile structure represented by the formula (I) and the olefin structure represented by the formula (II) are randomly arranged. This is because, when the nitrile structure represented by the formula (I) and the olefin structure represented by the formula (II) are randomly arranged, the rubber compound includes many arrangement combinations, which provide a small physical distance between the unsaturated bond (-C=C-) contained in the formula (II) and the nitrile structure represented by the formula (I).

Further, when the rubber compound includes the nitrile structure represented by the formula (I) and the olefin structure represented by the formula (II), R in the formula (II) may represent a divalent organic group having 4 or more and 100 or less carbon atoms and having an unsaturated bond represented by -C=C- in a structure thereof, or may represent a divalent organic group having 4 or more and 60 or less carbon atoms and having an unsaturated bond represented by -C=C- in a structure thereof. In addition, R in the formula (II) may represent a divalent organic group having 4 carbon atoms and having an unsaturated bond represented by -C=C-in a structure thereof.

In addition, the content of the nitrile structure in the rubber compound may be from 5 to 60 wt%. As described above, the thiol compound to be used as a crosslinking agent of the present invention is considered to be attracted to the nitrile structure in the rubber compound, to generate a radical, and to react with the olefin structure in the rubber compound. Accordingly, the content of the nitrile structure in the rubber compound as well as the olefin structure that directly reacts with the crosslinking agent has a very important meaning for quick progress of crosslinking in the method of producing a rubber molded article. In addition, the content of the nitrile structure in the rubber compound is more preferably from 5 to 45 wt%, particularly preferably from 15 to 45 wt%.

In addition, the content of the olefin structure in the rubber compound may be from 5 to 95 wt%. When the content of the olefin structure in the rubber compound is as low as about 1 wt%, the crosslink density does not reach a level enough to exhibit rubber elasticity, although the crosslinking reaction itself progresses. Therefore, when the content of the olefin structure in the rubber compound is low, the crosslink density may not reach a level enough to exhibit rubber elasticity, which is not preferred. Accordingly, the content of the olefin structure in the rubber compound is preferably 5 wt% or more. In addition, the content of the olefin structure in the rubber compound is more preferably from 55 to 95 wt%, particularly preferably from 55 to 85 wt%.

In addition, the rubber compound is a rubber compound containing any one of a nitrile rubber (nitrile butadiene rubber: NBR) and a hydrogenated nitrile rubber (hydrogenated nitrile butadiene rubber: HNBR). In addition, the rubber compound may be a nitrile rubber (nitrile butadiene rubber: NBR). In addition, the rubber compound may contain any one of a nitrile rubber (nitrile butadiene rubber: NBR) and a hydrogenated nitrile rubber (hydrogenated nitrile butadiene rubber: HNBR) and a compound selected from the group consisting of a chloroprene rubber (CR), an isoprene rubber (IR), a butyl rubber (IIR), a styrene-butadiene rubber (SBR), a butadiene rubber (BR), a urethane rubber, a fluororubber, an acrylic rubber, a silicone rubber, and a thermoplastic elastomer. It should be noted that examples of the thermoplastic elastomer include a polystyrene-based thermoplastic elastomer and a polyolefin-based thermoplastic elastomer.

In addition, the rubber compound contained in the rubber composition in the present invention may have a weight-average molecular weight of from 1,000 to 1,000,000, from 1,500 to 800,000, or from 2,000 to 700,000. When the weight-average molecular weight of the rubber compound contained in the rubber composition is 1,000 or less, the progress of the crosslinking reaction is suppressed. That is, the reaction for linking (crosslinking) molecules of the rubber compound, which is a polymer contained in the rubber composition, to each other, to thereby change physical and chemical properties, is suppressed, which is not preferred.

In the rubber composition to be used in the method of producing a rubber molded article according to the present invention, the content of the thiol compound may be from 0.1 part by weight to 20 parts by weight with respect to 100 parts by weight of the above-mentioned rubber compound. In addition, the content of the compound having the structure represented by the formula (I) may be from 0.1 part by weight to 20 parts by weight with respect to 100 parts by weight of the above-mentioned rubber compound.

Further, the rubber composition may be free of a substance for promoting a crosslinking reaction, such as a metal catalyst (for example, a noble metal catalyst such as Pt). That is, the present invention may be a method of producing a rubber molded article, including a crosslinking step of crosslinking a rubber compound at a temperature of 100°C or less, the rubber compound having a nitrile structure represented by the formula (I) and an olefin structure represented by the formula (II), in a rubber composition containing the rubber compound and a thiol compound having at least two thiol groups in a molecule thereof, the crosslinking step being performed without using a catalyst for promoting the crosslinking reaction.

In addition, the rubber composition to be used in the present invention may contain a rubber compound having a nitrile structure represented by the formula (I) and an olefin structure represented by the formula (II) and a thiol compound having at least two thiol groups in a molecule thereof and may be free of a catalyst for promoting a reaction of crosslinking of the rubber compound. Examples of the catalyst for promoting the reaction of crosslinking in the present invention include a metal catalyst (such as Fe, Cu, Pb, Co, or Mn), a noble metal catalyst (such as Pt, Pd, or Ru), and a ceramic catalyst (such as a metal-supported zeolite catalyst).

In the crosslinking step in the method of producing a rubber molded article according to the present invention, crosslinking of the rubber compound is performed at a temperature of 100°C or less. The rubber compound having a nitrile structure represented by the formula (I) and an olefin structure represented by the formula (II) has excellent reactivity with the thiol compound having at least two thiol groups in a molecule thereof. Therefore, the crosslinking step may be performed at a temperature of 100°C or less. When the crosslinking step is performed at a temperature of 100°C or less, carbon dioxide emissions are reduced in production of a rubber molded article.

In addition, the lower limit of the temperature in the crosslinking step in the present invention is not particularly limited as long as the temperature is equal to or higher than the glass transition temperature of the rubber compound to be used. That is, the present invention may include a crosslinking step of crosslinking a rubber compound at a temperature of the glass transition temperature of the rubber composition or more and 100°C or less, the rubber compound having a nitrile structure represented by the formula (I) and an olefin structure represented by the formula (II), in a rubber composition containing the rubber compound and a thiol compound having at least two thiol groups in a molecule thereof. Alternatively, in the crosslinking step in the present invention, crosslinking of the rubber compound may be performed at a temperature of 0°C or more and 100°C or less, or crosslinking of the rubber compound may be performed at a temperature of 5°C or more and 100°C or less.

In addition, in the crosslinking step in the present invention, crosslinking of the rubber compound may be performed at a temperature of 80°C or less, crosslinking of the rubber compound may be performed at a temperature of 60°C or less, crosslinking of the rubber compound may be performed at a temperature of 50°C or less, or crosslinking of the rubber compound may be performed at a temperature of 40°C or less.

Further, in the crosslinking step in the present invention, crosslinking of the rubber compound may be performed without applying an external energy to the rubber composition. Herein, the external energy may be an energy to be applied by irradiation with an energy ray, or may be an energy to be applied by heating. In addition, examples of the energy ray include an electromagnetic wave, radiation, and an electron beam. That is, in the crosslinking step in the method of producing a rubber molded article according to the present invention, crosslinking of the rubber compound may be performed without heating of the rubber composition.

In addition, in the crosslinking step in the method of producing a rubber molded article of the present invention, the crosslinking reaction is rapidly performed simultaneously with mixing the rubber compound and the thiol compound. That is, the crosslinking reaction in the method of producing a rubber molded article of the present invention may include a crosslinking step of crosslinking a rubber compound by mixing, in a rubber composition containing the rubber compound and a thiol compound, the rubber compound and the thiol compound at a temperature of 100°C or less.

In addition, in order to reduce the reaction rate of the crosslinking reaction between the thiol compound and the rubber compound to be used in the method of producing a rubber molded article of the present invention, the crosslinking step may be performed in a rubber composition containing the thiol compound and/or the rubber compound dissolved in an organic solvent for dissolving the thiol compound and/or the rubber compound to control the reaction rate of the crosslinking reaction.

That is, the crosslinking step in the method of producing a rubber molded article of the present invention may be a crosslinking step of, in a rubber composition containing a thiol compound and a rubber compound dissolved in an organic solvent for dissolving the rubber compound, crosslinking the rubber compound while removing the organic solvent at a temperature of 100°C or less. Alternatively, the crosslinking step in the method of producing a rubber molded article of the present invention may be a crosslinking step of, in a rubber composition containing a rubber compound and a thiol compound dissolved in an organic solvent for dissolving the thiol compound, crosslinking the rubber compound simultaneously with removing the organic solvent at a temperature of 100°C or less.

In addition, a more specific description is made of the case where any one of the compounds represented by the formulae (A-1) to (A-8) is used as the thiol compound. The compounds represented by the formulae (A-1) to (A-7) have molecular weights of 398.57, 488.66, 266.38, 150.31, 432.55, 238.32, and 544.80, respectively. In addition, the compound represented by the formula (A-8) has a molecular weight of 177.27 or more because the compound has a molecular weight of 177.27 when X¹ represents CH₂ and X² represents H. For example, when the thiol compound dissolved in an organic solvent for dissolving the thiol compound has a small molecular weight, the thiol compound may cause azeotropy together with the organic solvent by removing the organic solvent through volatilization.

Therefore, the thiol compound to be used in the method of producing a rubber molded article of the present invention may be a thiol compound having a molecular weight of 150 or more . In addition, the thiol compound to be used in the method of producing a rubber molded article of the present invention may be a thiol compound having a molecular weight of 200 or more, or a thiol compound having a molecular weight of 300 or more. In addition, the upper limit of the molecular weight of the thiol compound to be used in the method of producing a rubber molded article of the present invention is not particularly specified, but the thiol compound may have a molecular weight of 600 or less.

### Examples

The present invention is specifically described below by way of Examples. It should be noted that Examples below are for the purpose of specifically describing embodiments of the present invention, and do not limit the scope of the present invention.

First, Table 1 shows thiol compounds prepared in Examples. In addition, Table 2 shows rubber compounds prepared in Examples.

**[Table 1]**

| Thiol compound No. | Compound | Number of SH | Molecular weight |
|---|---|---|---|
| α1 | Trimethylolpropane tris(3-mercaptopropionate) | 3 | 398.57 |
| α2 | Pentaerythritol tetrakis(3-mercaptopropionate) | 4 | 488.66 |
| α3 | 1,4-Butanediol bis(3-mercaptopropionate) | 2 | 266.38 |
| α4 | 1,6-Hexanedithiol | 2 | 150.31 |
| α5 | Pentaerythritol tetrakis(mercaptoacetate) | 4 | 432.55 |
| α6 | 1,4-Butanediol bis(mercaptoacetate) | 2 | 238.32 |
| α7 | Pentaerythritol tetrakis(3-mercaptobutyrate) | 4 | 544.80 |
| *β* 8 | 2-Mercaptoethanol | 1 | 78.13 |
| *β* 9 | Trithiocyanuric acid | 3 | 177.27 |

**[Table 2]**

| Rubber compound No. | Product name | Content (wt%) of nitrile structure | Olefin structure |
|---|---|---|---|
| r1 | NBR (N260S manufactured by JSR Corporation) | 15 | Butadiene |
| r2 | NBR (Nipol DN401L manufactured by Zeon Corporation) | 18 | Butadiene |
| r3 | NBR (N250S manufactured by JSR Corporation) | 20 | Butadiene |
| r4 | NBR (Nipol DN407 manufactured by Zeon Corporation) | 22 | Butadiene |
| r5 | NBR (N240S manufactured by JSR Corporation) | 26 | Butadiene |
| r6 | NBR (N241 manufactured by JSR Corporation) | 29 | Butadiene |
| r7 | NBR (N241H manufactured by JSR Corporation) | 29 | Butadiene |
| r8 | NBR (Nipol DN306 manufactured by Zeon Corporation) | 29 | Butadiene |
| r9 | NBR (Nipol DN3335 manufactured by Zeon Corporation) | 33 | Butadiene |
| r10 | NBR (N237H manufactured by JSR Corporation) | 34 | Butadiene |
| r11 | NBR (N237 manufactured by JSR Corporation) | 34 | Butadiene |
| r12 | NBR (Nipol 1041L manufactured by Zeon Corporation) | 40.5 | Butadiene |
| r13 | NBR (N220S manufactured by JSR Corporation) | 41 | Butadiene |
| r14 | NBR (N220SH manufactured by JSR Corporation) | 41 | Butadiene |
| r15 | NBR (N222L manufactured by JSR Corporation) | 43 | Butadiene |

First, 10 g of each of the rubber compounds shown in Table 2 and 100 ml of an organic solvent for dissolving the rubber compound were placed in a 300-ml glass beaker and kept at 23°C for 24 hours to dissolve (swell) the rubber compound. It should be noted that the organic solvent is not particularly specified, and for example, toluene may be used. Next, the rubber compound dissolved in the organic solvent and each of the thiol compounds were mixed, and the mixture was stirred at 500 rpm/5 min. After that, the mixture of the rubber compound and the thiol compound was poured into a predetermined mold and dried at 23°C in a fume hood to volatize the organic solvent. Then, the rubber molded article after the drying was unmolded to afford a sample of the rubber molded article.

The preparation of the above-mentioned sample was performed for all combinations of the thiol compounds α1 to α7, β8, and β9 and the rubber compounds r1 to r15. Then, for all the samples of the rubber molded articles formed based on the respective combinations, the presence or absence of crosslinking was confirmed.

The presence or absence of crosslinking in each sample of the rubber molded articles was confirmed by cutting each sample into a piece measuring ϕ13 mm×2 mm, immersing the sample in a good solvent for the rubber component at 23°C for 24 hours, and visually confirming the presence or absence of the dissolution of the rubber molded article in the good solvent. If crosslinking is performed in the sample of the rubber molded article, the sample does not dissolve in the good solvent (such as toluene).

The results revealed that, all of the samples of the rubber molded articles formed using the thiol compounds α1 to 7 did not dissolve in the good solvent, and crosslinking progressed in the samples. On the other hand, it was found that all of the samples of the rubber molded articles formed using the thiol compounds β8 and 9 dissolved in the good solvent, and crosslinking did not progress in the samples.

## Claims

1. A method of producing a rubber molded article, comprising a crosslinking step of crosslinking a rubber compound at a temperature of 100°C or less, the rubber compound having a nitrile structure represented by the following formula (I) and an olefin structure represented by the following formula (II), in a rubber composition containing the rubber compound and a thiol compound having at least two thiol groups in a molecule thereof: 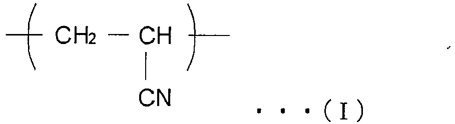
(̵R)̵ ... (II)
provided that R in the formula (II) represents a divalent organic group having 4 or more carbon atoms and having an unsaturated bond represented by -C=C- in a structure thereof,
wherein if the thiol compound contains a triazine ring, the triazine ring is not adjacent to any one of the thiol groups.

2. The method of producing a rubber molded article according to claim 1, wherein the thiol compound comprises a compound selected from the group consisting of trimethylolpropane tris(3-mercaptopropionate), pentaerythritol tetrakis(3-mercaptopropionate), 1,4-butanediol bis(3-mercaptopropionate), 1,6-hexanedithiol, pentaerythritol tetrakis(mercaptoacetate), 1,4-butanediol bis(mercaptoacetate), pentaerythritol tetrakis(3-mercaptobutyrate), a compound represented by the following formula (A-8), and combinations thereof: 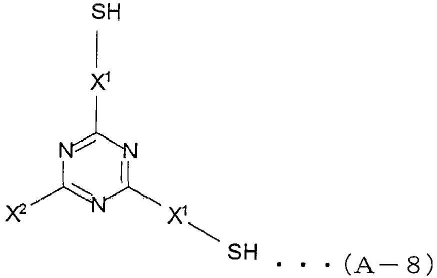 provided that X¹ in the formula (A-8) represents a divalent organic group, and X² represents a hydrogen atom or a monovalent organic group.

3. The method of producing a rubber molded article according to claim 1 or 2, wherein a content of the nitrile structure in the rubber compound is from 5 to 60 wt%.

4. A rubber composition, comprising a rubber compound having a nitrile structure represented by the following formula (I) and an olefin structure represented by the following formula (II), and a thiol compound having at least two thiol groups in a molecule thereof: 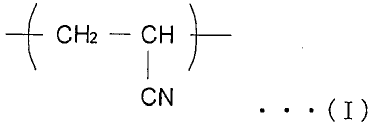
(̵R)̵ ... (II)
provided that R in the formula (II) represents a divalent organic group having 4 or more carbon atoms and having an unsaturated bond represented by -C=C- in a structure thereof,
wherein if the thiol compound contains a triazine ring, the triazine ring is not adjacent to any one of the thiol groups.

5. A rubber molded article, which is produced by the method of producing a rubber molded article according to any one of claims 1 to 3.

## Patentansprüche

1. Verfahren zur Herstellung eines Gummiformkörpers, umfassend einen Vernetzungsschritt zum Vernetzen einer Kautschukverbindung bei einer Temperatur von 100 °C oder weniger, wobei die Kautschukverbindung eine durch die folgende Formel (I) dargestellte Nitrilstruktur und eine durch die folgende Formel (II) dargestellte Olefinstruktur aufweist, in einer Kautschukzusammensetzung, die die Kautschukverbindung und eine Thiolverbindung mit mindestens zwei Thiolgruppen in einem Molekül davon enthält: 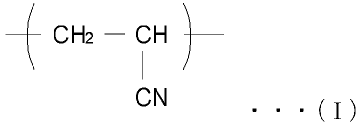
(̵R)̵ ... (II)
vorausgesetzt, dass R in der Formel (II) eine zweiwertige organische Gruppe darstellt, die 4 oder mehr Kohlenstoffatomen aufweist und in ihrer Struktur eine durch -C=C- dargestellte ungesättigte Bindung aufweist,
wobei, wenn die Thiolverbindung einen Triazinring enthält, der Triazinring nicht an irgendeine der Thiolgruppen angrenzt.

2. Verfahren zur Herstellung eines Gummiformkörpers nach Anspruch 1, wobei die Thiolverbindung eine Verbindung umfasst, die ausgewählt ist aus der Gruppe bestehend aus Trimethylolpropan-tris(3-mercaptopropionat), Pentaerythritol-tetrakis(3-mer-captopropionat), 1,4-Butandiol-bis(3-mercaptopropionat), 1,6-Hexandithiol, Pentaerythritol-tetrakis(mercaptoacetat), 1,4-Butandiol-bis(mercaptoacetat), Pentaerythritol-tetrakis(3-mercaptobutyrat), einer Verbindung der folgenden Formel (A-8) und Kombinationen davon: 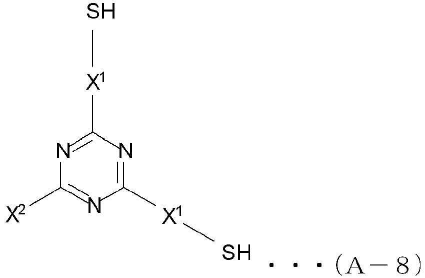 vorausgesetzt, dass X¹ in der Formel (A-8) eine zweiwertige organische Gruppe darstellt und X² ein Wasserstoffatom oder eine einwertige organische Gruppe darstellt.

3. Verfahren zur Herstellung eines Gummiformkörpers nach Anspruch 1 oder 2, wobei ein Gehalt der Nitrilstruktur in der Kautschukverbindung von 5 bis 60 Gew.-% beträgt.

4. Kautschukzusammensetzung, umfassend eine Kautschukverbindung mit einer durch die folgende Formel (I) dargestellten Nitrilstruktur und einer durch die folgende Formel (II) dargestellten Olefinstruktur und eine Thiolverbindung mit mindestens zwei Thiolgruppen in einem Molekül davon: 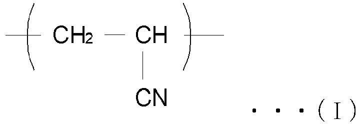
(̵R)̵ ... (II)
vorausgesetzt, dass R in der Formel (II) eine zweiwertige organische Gruppe darstellt, die 4 oder mehr Kohlenstoffatomen aufweist und in ihrer Struktur eine durch -C=C- dargestellte ungesättigte Bindung aufweist,
wobei, wenn die Thiolverbindung einen Triazinring enthält, der Triazinring nicht an irgendeine der Thiolgruppen angrenzt.

5. Gummiformkörper, der durch das Verfahren zur Herstellung eines Gummiformkörpers gemäß einem der Ansprüche 1 bis 3 hergestellt ist.

## Revendications

1. Procédé de production d'un article moulé en caoutchouc, comprenant une étape de réticulation consistant à réticuler un composé de caoutchouc à une température de 100 °C ou moins, le composé de caoutchouc ayant une structure de nitrile représentée par la formule (I) suivante et une structure d'oléfine représentée par la formule (II) suivante, dans une composition de caoutchouc contenant le composé de caoutchouc et un composé de thiol contenant au moins deux groupes thiol dans une molécule de celui-ci : 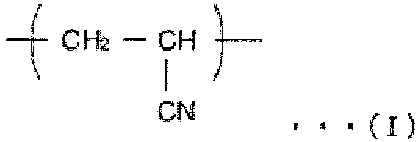
(̵R)̵ ... (II)
à condition que R dans la formule (II) représente un groupe organique divalent contenant 4 atomes de carbone ou plus et ayant une liaison insaturée représentée par -C=C- dans une structure de celui-ci,
dans lequel si le composé de thiol contient un cycle triazine, le cycle triazine n'est pas adjacent à l'un quelconque des groupes thiol.

2. Procédé de production d'un article moulé en caoutchouc selon la revendication 1, dans lequel le composé de thiol comprend un composé sélectionné dans le groupe constitué du tris(3-mercaptopropionate) de triméthylolpropane, du tétrakis(3-mercaptopropionate) de pentaérythritol, du bis(3-mercaptopropionate) de 1,4-butanediol, du 1,6-hexanedithiol, du tétrakis-(mercaptoacétate) de pentaérythritol, du bis(mercapto-acétate) de 1,4-butanediol, du tétrakis(3-mercapto-butyrate) de pentaérythritol, d'un composé représenté par la formule (A-8) suivante, et de leurs combinaisons : 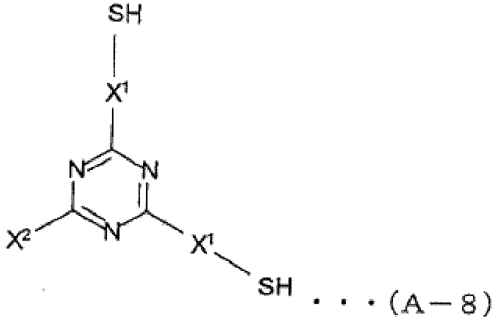 à condition que X¹ dans la formule (A-8) représente un groupe organique divalent, et X² représente un atome d'hydrogène ou un groupe organique monovalent.

3. Procédé de production d'un article moulé en caoutchouc selon la revendication 1 ou 2, dans lequel une teneur de la structure de nitrile dans le composé de caoutchouc est de 5 à 60 % en poids.

4. Composition de caoutchouc, comprenant un composé de caoutchouc ayant une structure de nitrile représentée par la formule (I) suivante et une structure d'oléfine représentée par la formule (II) suivante, et un composé de thiol contenant au moins deux groupes thiol dans une molécule de celui-ci : 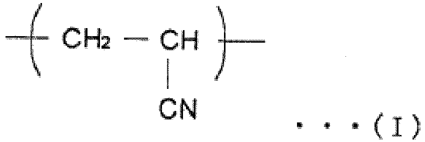
(̵R)̵ ... (II).
à condition que R dans la formule (II) représente un groupe organique divalent contenant 4 atomes de carbone ou plus et ayant une liaison insaturée représentée par -C=C- dans une structure de celui-ci,
dans laquelle si le composé de thiol contient un cycle triazine, le cycle triazine n'est pas adjacent à l'un quelconque des groupes thiol.

5. Article moulé en caoutchouc, qui est produit par le procédé de production d'un article moulé en caoutchouc selon l'une quelconque des revendications 1 à 3.
